(19)

(11) **EP 2 527 073 B1**

(12) **EUROPEAN PATENT SPECIFICATION**

(45) Date of publication and mention of the grant of the patent: **21.01.2015 Bulletin 2015/04**

(21) Application number: **12169054.9**

(22) Date of filing: **23.05.2012**

(51) Int Cl.:
***B23K 9/00*** *(2006.01)*
***B23K 9/028*** *(2006.01)*
***B23K 9/04*** *(2006.01)*
***B23K 9/173*** *(2006.01)*
***B23K 9/23*** *(2006.01)*
***B23K 9/235*** *(2006.01)*
***F01D 5/06*** *(2006.01)*
***F01D 25/00*** *(2006.01)*

(54) **Welded assembly with dissimilar metal weld and its manufacturing method of large welded structures such as the turbine rotor**

Geschweisste Verbindung mit ungleicher Metallschweißung und Herstellungsverfahren großer geschweißter Strukturen wie zum Beispiel Turbinenrotoren

Assemblage soudé avec soudure métallique dissemblable et son procédé de fabrication de structures soudées de grande taille tels que le rotor de turbine

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2011 JP 2011115134**

(43) Date of publication of application: **28.11.2012 Bulletin 2012/48**

(73) Proprietor: **Mitsubishi Hitachi Power Systems, Ltd.**
**Yokohama, Kanagawa 220-8401 (JP)**

(72) Inventors:
- **Nishioka, Eiji**
  **Tokyo, 100-8220 (JP)**
- **Sato, Jun**
  **Tokyo, 100-8220 (JP)**
- **Imano, Shinya**
  **Tokyo, 100-8220 (JP)**
- **Kudo, Takeshi**
  **Tokyo, 100-8220 (JP)**
- **Murata, Kenichi**
  **Tokyo, 100-8220 (JP)**
- **Hosokawa, Kazutaka**
  **Tokyo, 100-8220 (JP)**
- **Endo, Kazuhiko**
  **Tokyo, 100-8220 (JP)**

(74) Representative: **Beetz & Partner**
**Patentanwälte**
**Steinsdorfstraße 10**
**80538 München (DE)**

(56) References cited:
**JP-A- 6 339 776**
**JP-A- 51 081 749**
**JP-A- 61 266 188**
**JP-A- 2007 278 064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 527 073 B1**

Printed by Jouve, 75001 PARIS (FR)

## Description

The present invention relates to a welded assembly and its manufacturing methods according to the preamble of claims 1 and 12-13 (see, for example, JP 2007-278 064), and more particularly, to a product obtained by welding and integrating two different materials of large welded structures such as the turbine rotor, and its manufacturing method.

Background Art

Some large welded structures are laterally placed and welded due to limitations of deformation of their shapes, work space, and the like. Examples of the structures include a turbine rotor to be welded. In general, a large steam turbine rotor has a large shaft length. In addition, a high-pressure-side rotor is required to have a high-temperature creep rupture strength, and a low-pressure-side rotor is required to have a tension strength and toughness. Therefore, in the case of forming a steam turbine rotor using one member, it has been difficult to obtain characteristics that satisfy these demands. In this regard, there is known a manufacturing method in which a high-pressure-side rotor is made of a material excellent in high-temperature creep rupture strength; a low-pressure-side rotor is made of a material excellent in tension strength and toughness; and these materials are integrated by welding.

However, when the rotor is welded, a heat affected zone (HAZ) is formed in the parent material of the rotor. This HAZ includes a rapid cooling structure region with a high hardness and an over aging region with a low hardness. Accordingly, a strength uneven region is generated in the HAZ. In the case where the rotor is formed of a combination of the same materials by welding, the unevenness of the strength is alleviated by performing stress relief annealing after welding. Meanwhile, in the case where the rotor is formed of a combination of dissimilar metals, heat treatment temperatures required for the stress relief of the rotor are different. For this reason, the effect of alleviating the unevenness of the strength caused by heat treatment cannot be expected.

Accordingly, as disclosed in JP Patent Application Publication No. 2001-123801, JP Patent Application Publication No. 2000-64805, and JP Patent Examined Application Publication No. 6-78721, for example, there are known methods of forming a buttering portion to achieve relaxation of the chemical composition of each of a rotor and a weld on a groove face of the rotor, before welding the rotor in the case of welding the rotor made of dissimilar metals. These methods use a weld having a chemical composition located between the rotor and the welding material, and perform padding welding on the buttering portion by tungsten inert gas arc (TIG) welding, metal inert gas (MIG) welding, submerged arc welding (SAW), or the like.

JP Patent Application Publication No. 2007-278064 proposes a method of performing butt welding using a buttering material and forming a buttering portion from a welding metal.

In the dissimilar metal welds including the buttering portion disclosed in JP Patent Application Publication No. 2001-123801, JP Patent Application Publication No. 2000-64805, and JP Patent Examined Application Publication No. 6-78721, a laminated direction of a buttering is perpendicular to the plate thickness of the parent material and thus coincides with a stress loading direction, leading to deterioration in strength reliability. Further, the buttering is applied to an end (plane) of a parent material. As a result, the shielding effect is reduced and the oxygen concentration of the welding metal is increased, leading to deterioration in strength.

Further, in the dissimilar metal welds including a buttering layer disclosed in JP Patent Application Publication No. 2007-278064, the bottom of the buttering is located in a butt portion with great dilution between the welding metal and the parent material, which deteriorates the strength reliability. Furthermore, the outer peripheral end of the buttering portion is located in the vicinity of an opening of a welding groove, which produces the same conditions as those for the buttering to be subjected to padding welding on the plane as disclosed in JP Patent Application Publication No. 2001-123801, JP Patent Application Publication No. 2000-64805, and JP Patent Examined Application Publication No. 6-78721. Thus, there is a problem of deterioration in strength due to an increase in oxygen concentration of the welding metal.

To solve the above-described problems, the present invention has an object to provide a welded assembly and its manufacturing methods which are formed by welding two parent materials having at least one of different compositions and different refining conditions and which include a buttering portion with a small variation in strength distribution in a plate thickness direction, and a manufacturing method of the dissimilar metal welds.

The document JP 6339776A proposes to provide a clad layer on a butt welding end of a first member composed of Cr-Mo steel and to connect the first member and a second member composed of Ni-Cr-Mo-Fe alloy via a butt weld zone and the clad layer.

SUMMARY OF THE INVENTION

To achieve the above-described object, the present inventor(s) has (have) researched the composition distribution of butt welding metals to obtain a buttering portion. As a result, it has turned out that a butt portion corresponding to the bottom of the buttering portion is formed by mixing two parent materials to be butted against the welding metals, and has a high dilution ratio. Further, it is obvious that in a welding opening corresponding to a surface layer portion of the buttering portion, the oxygen concentration is higher than that of a central portion and the strength reliability is lowered.

On the basis of the above results, according to an aspect of the present invention, a weld assembly is defined in claim 1.

According to another aspect of the present invention, there is provided a method of manufacturing dissimilar metal welds formed by welding two parent materials having at least one of different compositions and different refining conditions according to claim 12. oxygen concentration of the surface layer portion of the buttering portion are low, which makes it possible to set the dilution ratio to 50% or less. Consequently, it is possible to provide an effect of preventing the deterioration in strength of the welding metal due to an increased in oxygen concentration, and improving the strength reliability of large welded structures such as the turbine rotor.

According to a further embodiment of the invention, another method of manufacturing is defined in claim 13.

## BRIEF DESCRIPTION OF THE DRAWINGS

FIG. 1 schematically shows a side surface of a tungsten-inert gas welding apparatus when dismissal metals of an exemplary turbine rotor are welded.

FIG. 2, (A) to (E) schematically show a manufacturing flow of welding two members made of different materials according to Example 1.

FIG. 3, (A) to (E) schematically show a manufacturing flow of welding two members made of different materials according to a related art method.

FIG. 4, up and down, shows an impact test result showing an effect of welding metals in a laminated direction as an example of a mechanical characteristic evaluation result of a buttering 22.

FIG. 5A shows a case of performing padding welding on a plane in a welding method using a buttering material, and FIG. 5B shows a case of butt welding on a groove in the welding method using the buttering material.

FIG. 6, (A) to (E), is schematic diagrams showing a flow of manufacturing dissimilar metal welds of another related art method, not covered by the present invention.

FIGS. 7A and 7B show schematic diagrams of a model for estimating an dilution ratio.

FIG. 8, (A) to (E), shows a flow of manufacturing welding two members made of different materials according to Example 2.

FIG. 9, (A) to (E), shows a flow of manufacturing dissimilar metal welds according to Example 3.

FIG. 10, (A) to (E), shows a flow of manufacturing dissimilar metal welds according to Example 4.

## DETAILED DESCRIPTION OF THE PREFERRED EMBODIMENTS

Examples will be described below as embodiments for carrying out the present invention.

### [Example 1]

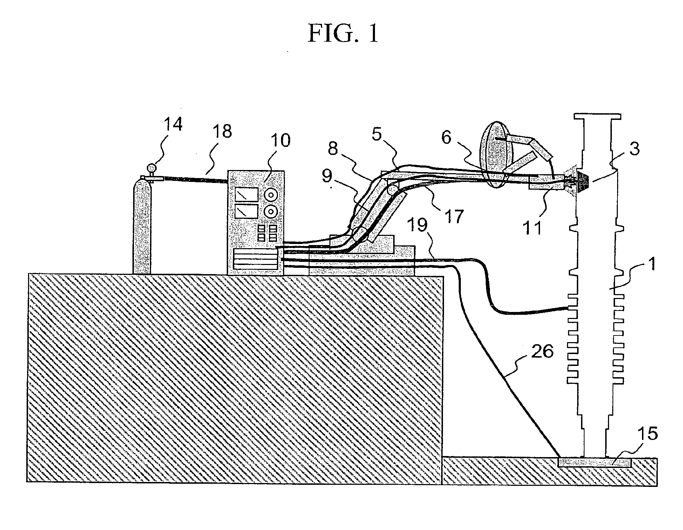

Example 1 of the present invention will be described below with reference to FIGS. 1 to 6. Though Example 1 illustrates dismissal metal welds of a turbine rotor as dissimilar metal welds, dissimilar metal welds of other product may also be used. The specifications and composition ranges of two dissimilar metals forming the welds are shown in the following Table 1. Example 1 uses an Ni-base superalloy and 12%-Cr steel from Table 1, and these components constitute the dissimilar metal welds.

[Table 1]

| Kinds of steels | C | Mn | Ni | Cr | Mo | W | Nb | Co | B | V | Ti | Al | Ta | Hf | Zr | Fe |
|---|---|---|---|---|---|---|---|---|---|---|---|---|---|---|---|---|
| Ni-base superalloy | 0.05 ~ 0.20 | | bal. | 13 ~ 15.5 | 0.1 ~ 2.0 | 4.5 ~ 10 | 0.1 ~ 1.0 | 5 ~ 15 | 0.001 ~ 0.03 | | 0.1 ~ 2.0 | 4.0 ~ 5.5 | 0.1 ~ 3.0 | 0.1 ~ 2.0 | 0.01 ~ 0.1 | |
| Ni-Fe-base superalloy | ≦0.05 | | bal. | 14 ~ 16 | | | 1.9 ~ 2.7 | | | | 1.2 ~ 1.7 | 1.1 ~ 1.5 | | | | 30 ~ 40 |
| 12% Cr steel | 0.1 ~ 0.2 | 0.3 ~1.0 | ≦1 | 9 ~ 13 | 0.1 ~ 1.5 | 0.2 ~ 5.0 | 0.02 ~ 0.1 | ≦3 | | | | | | | | bal. |
| 1% Cr-Mo-V steel | 0.25 ~ 0.35 | 0.5 ~ 1 | ≦1 | 0.8 ~ 1.5 | 1.0 ~ 1.5 | | | | | 0.2 -0.3 | | | | | | bal. |
| 3~4% Ni-Cr-Mo-V-based steel | 0.17 ~ 0.32 | 0.2 ~ 0.4 | 3 ~ 4 | 1.25 ~ 2.0 | 0.25 ~ 0.60 | | | | | 0.05 ~ 0.15 | | | | | | bal. |
| (mass %) | | | | | | | | | | | | | | | | |

FIG. 1 schematically shows a side surface of a tungsten-inert gas welding apparatus when dissimilar metals of a steam turbine rotor are welded, for example. This welding apparatus includes at least a drive unit 5, a welding unit 6, a control unit 10, a signal cable 8 for transmitting and receiving signals between the drive unit 5 and the control unit 10, and a signal cable 9 for transmitting and receiving signals between the welding unit 6 and the control unit 10. The drive unit 5 is at least configured to be able to move in the vicinity of a weld 3 in a shaft direction and a circumferential direction of a turbine rotor 1. The welding unit 6 is configured to form the weld 3 by inputting heat into a parent material 1. The drive unit 5 shown in FIG. 1 is an autonomous-type unit that moves in contact with a welding structure (turbine rotor). Alternatively, the drive unit 5 may be moved by an external force of an operation arm or the like, for example.

Example 1 uses a tungsten-inert gas (TIG) welding with a heat input amount of 20 KJ/cm. Alternatively, other methods such as submerge ark welding(SAW), shielded metal ark welding (SMAW), metal inert gas (MIG) welding, laser welding, and CMT (Cold Metal Transfer) may also be used.

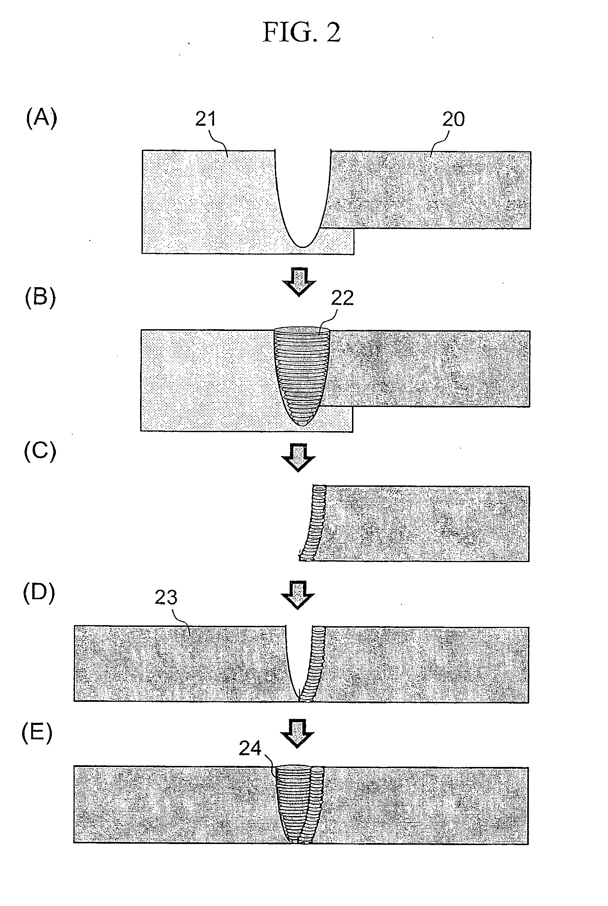

FIG. 2 schematically shows a manufacturing flow of welding two members made of different materials according to Example 1. The flow will be described below with reference to (A) to (E).

FIG. 2 (A) shows the step of butting a parent material 20 and a dummy material 21. The heat capacity of the dummy material 21 is preferably set to the same level as that of the parent material 20 so that unevenness of the cooling rate during welding can be suppressed. It is more preferable that the material of the dummy material 21 is the same as the parent material 20. The plate thickness of the dummy material 21 is set to be greater than that of the parent material 20.

The bottom of the dummy material 21 extends beyond an end of the parent material 20 so as to overlap the parent material 20. In Example 1, the plate thickness of the bottom of the dummy material 21 extending to the side of the parent material 20 is 3 mm, but the plate thickness may be equal to or more than 3 mm. When the plate thickness is less than 3 mm, a portion having a high dilution ratio unfavorably remains in the buttering 22 to be subsequently processed. In this case, however, the plate thickness of the bottom of the dummy material 21 is preferably as small as possible as long as the plate thickness is 3 mm or more, and a maximum length of 10 mm is sufficient.

The length of the bottom of the dummy material 21 extending to the side of the parent material 20 is 10 mm from the center of the groove, but a length of 3 mm or more is sufficient. A bottom length of less than 3 mm is not favorable, because there is a problem in that a hole is generated in the shape of the butting groove portion, or the thickness of the groove portion is reduced with the result that the groove portion is melted down. Note that the bottom length of the dummy material 21 is preferably as small as possible as long as the bottom length is equal to or larger than 3 mm from the center of the groove, and a maximum length of 15 mm from the center of the groove is sufficient.

FIG. 2 (B) shows the state of the step of performing butt welding on the groove of each of the parent material 20 and the dummy material 21 by using a welding metal material for the buttering 22.

FIG. 2 (C) shows the state of the step of processing the groove of the buttering 22 by removing a part of each of the dummy material 21 and the buttering 22, according to the present invention. By this step, the buttering 22 is formed of welding metals laminated in the same direction as the plate thickness direction of the parent material 20.

FIG. 2 (D) shows the state of the step of butting the parent material 23 and the buttering 22. The buttering 22 is obtained so that the dilution ratio of the butt portion becomes 50% or less, and the groove is processed with respect to the end thereof.

FIG. 2 (E) shows the state of the step of performing butt welding using a welded metal 24 with respect to the groove of each of the parent material 23 and the buttering 22.

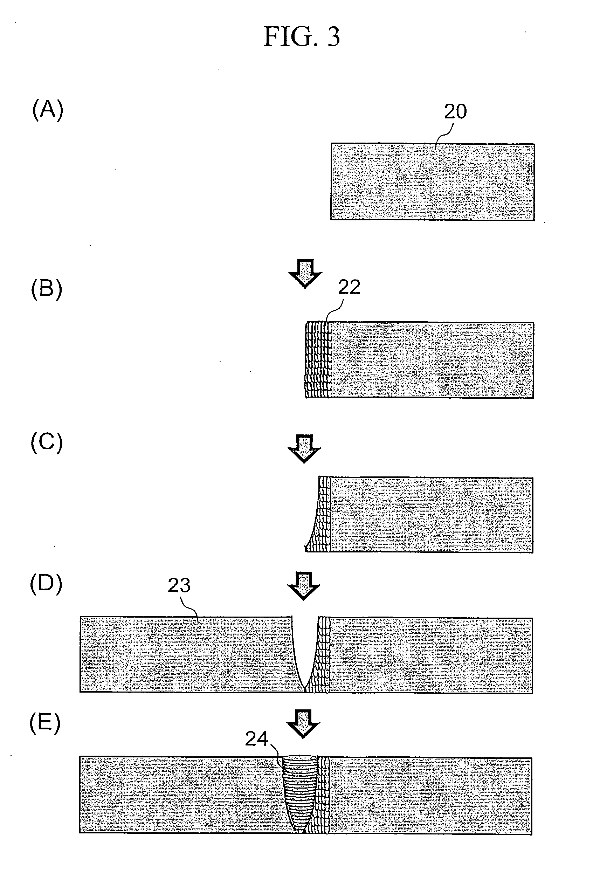

FIG. 3 schematically shows a manufacturing flow of welding two members made of different materials by a related art method, for comparison with the present invention. The related art method illustrated herein greatly differs from the method of Example 1 in the step of forming the face of the parent material 20 shown in FIG. 3A into a plane and in the step of performing padding welding using the buttering 22 on the face of the parent material 20 shown in FIG. 3B. In the step of forming the face of the parent material 20 shown in FIG. 3A into a plane, butting against the dummy material 21 shown in FIG. 2A is not carried out. In the step of performing padding welding using the welding material of the buttering 22 on the face of the parent material 20 shown in FIG. 3B, padding welding is performed such that the laminated direction of the padding welds made of the welding material of the buttering 22 becomes perpendicular to the plate thickness direction of the parent material 20, and the laminated direction of the padding welds is different by 90 degrees from the plate thickness direction of the parent material 20 shown in FIG. 2B, as compared to layers laminated in the same direction.

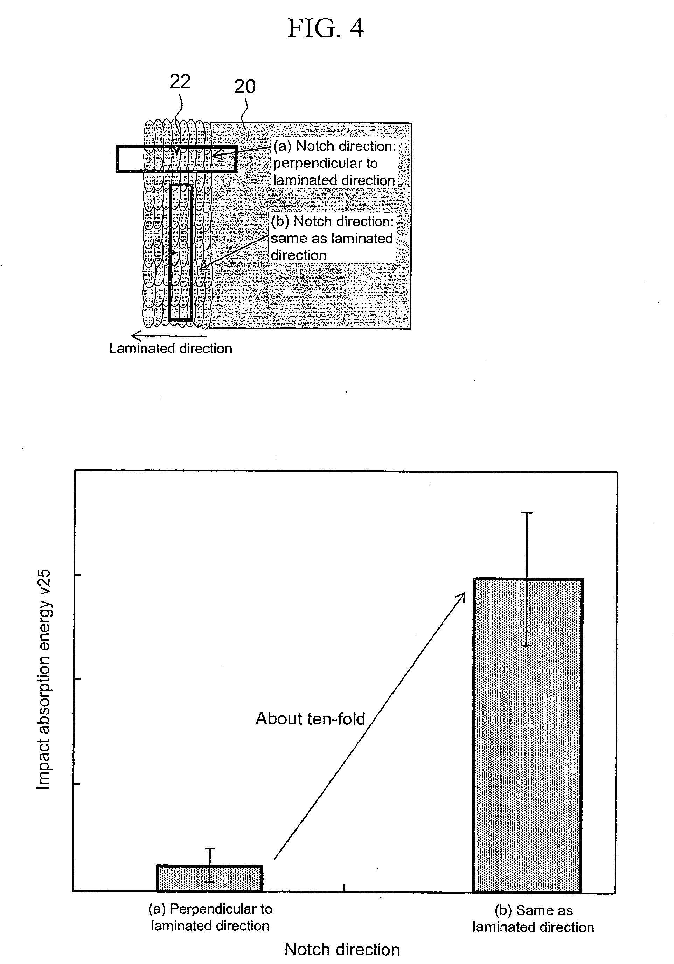

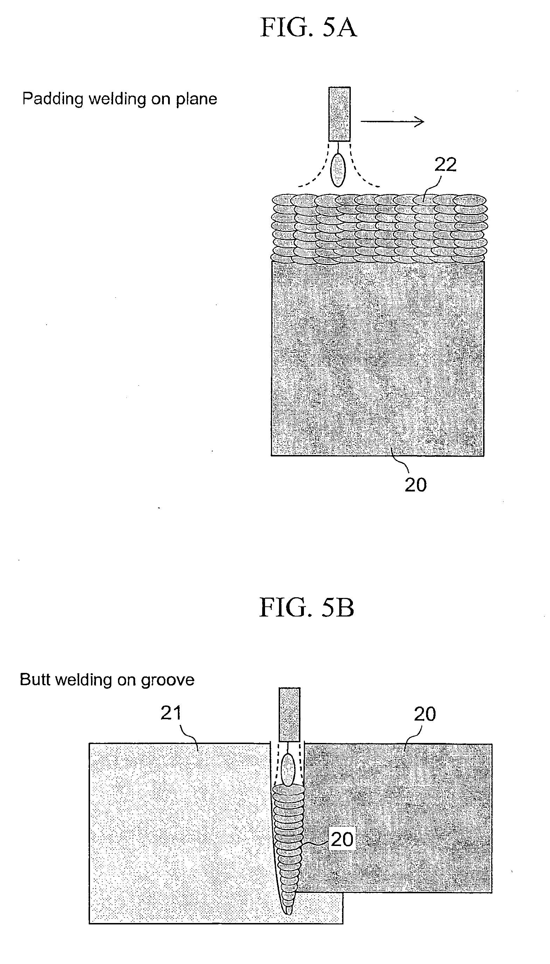

Referring next to FIGS. 4, and 5A and B, an advantageous effect of the dissimilar metal welds of Example 1 will be described. FIG. 4 shows an impact test result as an example of the mechanical characteristic evaluation result of the buttering 22. In the upper figure of FIG. 4, (a) illustrates that a notch direction of an impact test piece is perpendicular to the laminated direction and (b) illustrates that the notch direction of the impact test piece coincides with the laminated direction. As a result of the impact test, the value of the impact absorption energy of the impact test piece (b) is about ten times higher than the value of the impact test piece (a). Thus, it has turned out that in the welding structure in which a stress is applied in the plate thickness direction, when the laminated direction of the buttering 22 coincides with the plate thickness direction, the anti-shock property is excellent and more favorable in view of the strength reliability, as compared to the case where the laminated direction of the buttering 22 is perpendicular to the plate thickness direction. Accordingly, in Example 1 according to the present invention, the laminated direction of the buttering 22 is set to coincide with the thickness direction of the parent material based on the same idea of the impact test piece (b), which contributes to an improvement in the strength reliability.

FIGS. 5A and 5B schematically show a welding method using the material of the buttering 22. FIG. 5A schematically shows a method of performing padding welding on a plane by a related art method. FIG. 5B schematically shows a method of performing butt welding on a groove according to Example 1 of the present invention.

In the case of performing padding welding on the plane shown in FIG. 5A, a shielding gas for TIG welding spreads, which deteriorates the shielding performance with respect to the welding metal. On the other hand, in the case of performing butt welding on the groove shown in FIG. 5B, the shielding gas is concentrated in the groove, leading to an improvement in the shielding performance with respect to the welding metal. The shielding performance affects the strength based on the oxidation degree of the welding metal. As a matter of course, the strength increases as the oxidation degree decreases, and the strength decreases as the oxidation degree increases. Accordingly, in Example 1 of the present invention, the method of obtaining the buttering 22 is set based on the same idea as that shown in FIG. 5B, which contributes to an improvement in the strength.

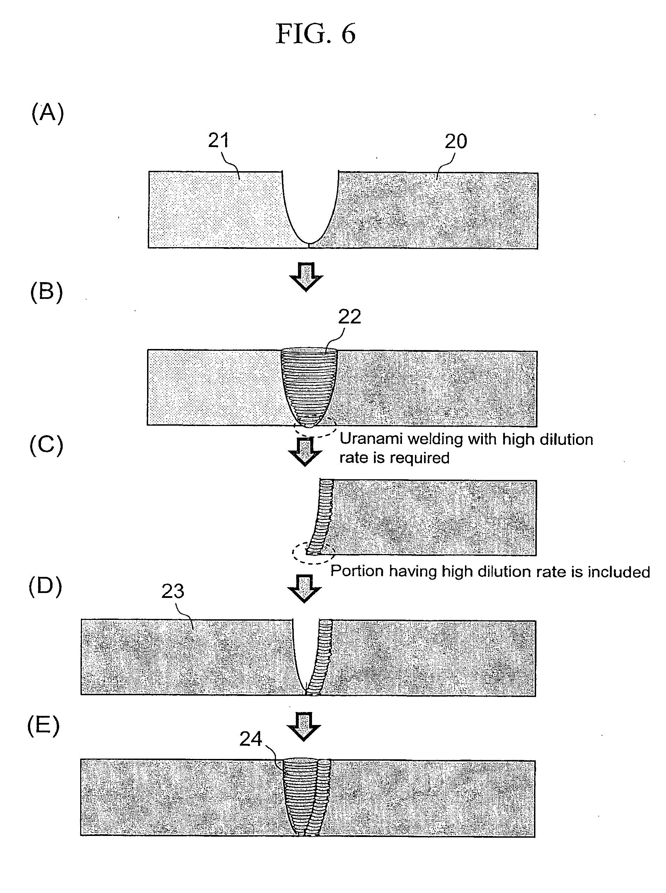

FIG. 6, (A) to (E), shows a flow of manufacturing dissimilar metal welds in another related art method for comparison with Example 1 of the present invention. Example 2 differs from Example 1 of the present invention in the plate thickness of the dummy material 21 shown in FIG. 6 (A) and in the dilution ratio of the butt portion of the buttering 22 shown in FIG. 6 (C). In the case of manufacturing the dissimilar metal welds in accordance with the manufacturing flow shown in FIG. 6, the dilution ratio of the bottom of the weld using the buttering 22 becomes 50% or more by dilution of the parent material 20 and the dummy material 22 as shown in FIG. 6 (B). The dilution ratio is defined as in Formula 1.

$$\text{(dilution ratio)}=1-\text{(volume of welding metal for first layer welding)}/\text{(volume of fusion zone by first layer welding)} \qquad (1)$$

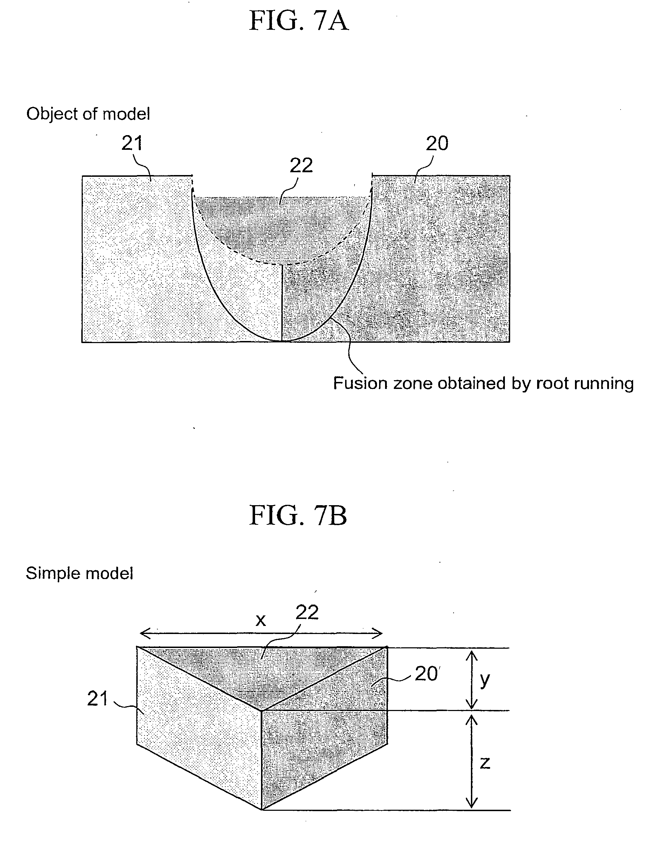

According to Formula 1, the dilution ratio is determined by the welding metal for the first layer welding and the volume of the fusion zone obtained by the first layer welding. Here, the dilution ratios in various groove shapes are estimated . FIGS. 7A and 7B show a model for estimating a dilution ratio. FIG. 7A shows an object of a model, and FIG. 7B shows a simple model. In FIG. 7B, "x" represents the width of a fusion zone obtained by the first layer welding; "y" represents the depth of the welding metal for the first layer welding, and "z" represents a butt height. The model formula shown in Formula 2 was used as an estimating method.

$$\text{(dilution ratio)}=1-y/(2z+y) \qquad (2)$$

In Formula 2, since "x" has no relation with the estimation of the simple model, the dilution ration was estimated using "y" and "z" as variables. The actual "y" is in the range of 1 to 3 mm under the conditions for forming the welding metal. Further, the actual "z" is in the range of 1 to 3 mm under the condition of forming a sound penetration. As a result of estimating the dilution ratio within the variance range of the actual "y" and "z", the range was 0.6 to 0.7. Thus, when the dilution ratio is high, the characteristics of the buttering portion deteriorate to be lower than the originally intended value. Therefore, it is preferable that the dilution ratio be at least 50% or less, and preferably 25% or less.

On the other hand, the buttering 22 shown in FIG. 6 (C) needs to be obtained from a portion having a dilution ratio of 50% or more as shown in FIG. 6 (B), so that the deterioration in characteristics is unavoidable. In view of the above, Example 1 eliminates the need to obtain the buttering from a portion having a dilution ratio of 50% or more, thereby avoiding the characteristic deterioration.

[Example 2]

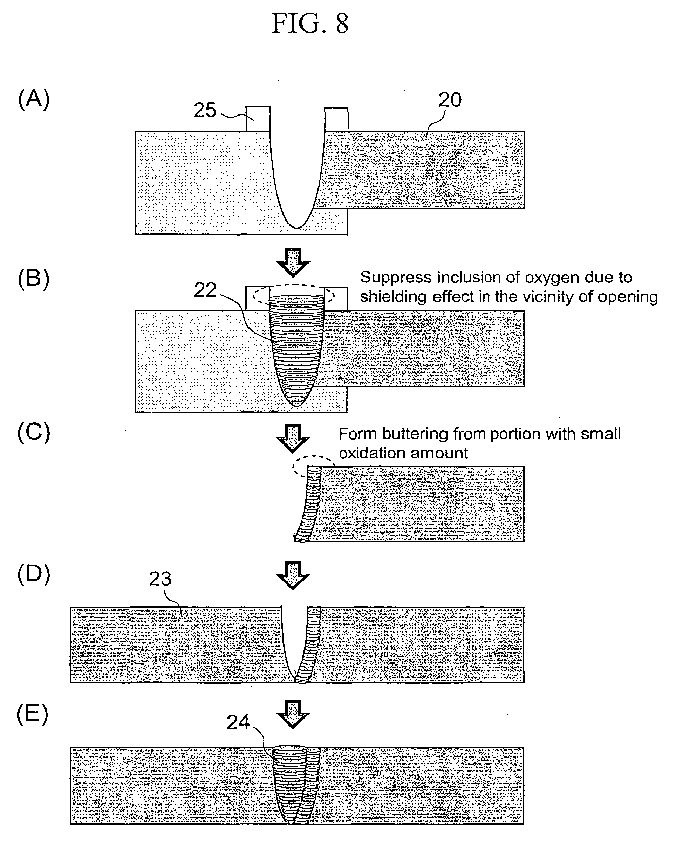

Example 2 according to the present invention will be described with reference to FIG. 8, (A) to (E). Example 1 has characteristics involving the shape on the bottom side of the weld in the manufacturing method of the dissimilar metal welds, whereas Example 2 has characteristics involving the bottom side as well as the opening side of the weld in the manufacturing method of the dissimilar metal welds. The description of the characteristics identical with those of the Example 1 is herein omitted and only the differences from Example 1 will be described below.

FIG. 8, (A) to (E), shows a manufacturing flow of welding two members made of different materials according to Example 2. Example 2 differs from Example 1 only in FIG. 8, (A) and (B). FIG. 8 (A) shows the state of the step of butting the parent material 20 and the dummy material 21. In the vicinity of the opening of each of the parent material 20 and the dummy material 21, a shielding plate 25 is mounted to increase the depth of the welding groove. The shielding plate of Example 2 has a height of 10 mm and a width of 3 mm. Although the shielding plate may have a height of more than 10 mm and a width of more than 3 mm from a functional point of view, a minimum height and a minimum width are desirable in terms of cost. When the height is less than 10 mm, the concentration effect of the shielding gas within the welding groove is not exerted. Accordingly, oxygen is included in the weld in the vicinity of the shielding plate opening, which causes the characteristic deterioration. Further, when the shielding plate 25 has a width of less than 3 mm, the rigidity of the shielding plate which is necessary for scanning of the welding apparatus is insufficient.

FIG. 8 (B) shows the state of performing butt welding on the shielding plate by using the material of the buttering 22. The weld in the vicinity of the opening of the shielding plate includes oxygen because the concentration effect of the shielding gas is low. However, in the case of processing the groove in the buttering 22 shown in FIG. 8 (C), the weld in the vicinity of the shielding plate opening are cut off according to the present invention, because the weld is not located in the shape of the buttering 22. As a result, the buttering portion 22 shown in FIG. 8 (C) does not include any portion including oxygen, which prevents occurrence of the characteristic deterioration. [Example 3]

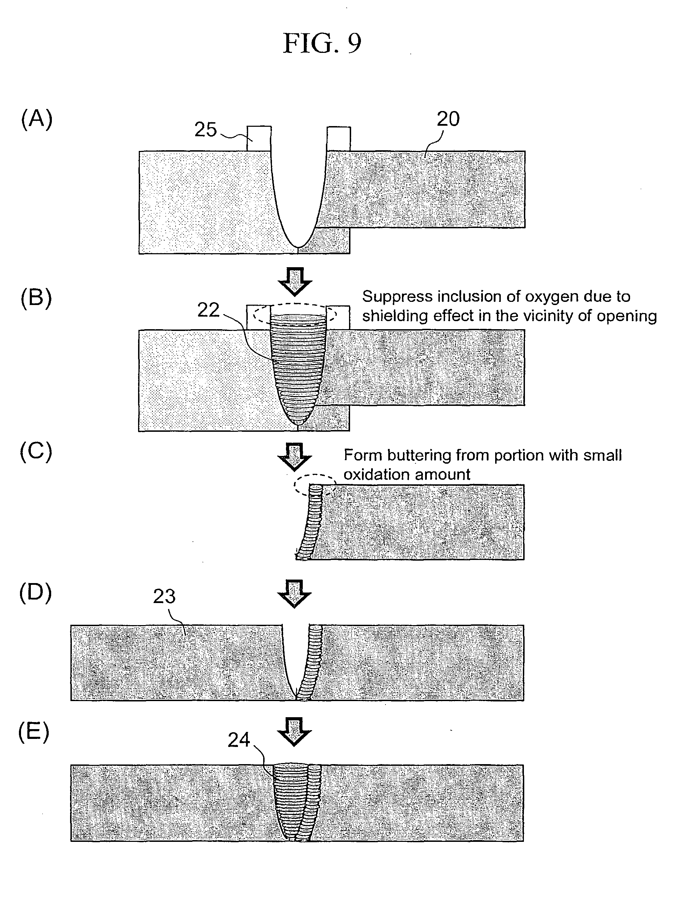

Example 3 according to the present invention will be described with reference to FIG. 9, (A) to (E). An Ni-base superalloy and 1%-Cr-Mo-V-based steel are used as two dissimilar metals in Example 3. Example 2 relates to the shape on the bottom side of the weld in the manufacturing method of the dissimilar metal welds, whereas Example 3 relates to the material on the bottom side. The description of the characteristics identical with those of the Example 2 is omitted, and only the differences from Example 2 will be described below.

FIG. 9, (A) to (E), shows a manufacturing flow of welding two members made of different materials according to Example 3. Example 3 differs from Example 2 only in FIG. 9 (A) and (B). FIG. 9 (A) shows the step of butting the parent material 20 and the dummy material 21. In the vicinity of the weld bottom, the dummy material 21 and the parent material 20 have the same plate thickness. At a position apart from the vicinity thereof, the dummy material 21 and the parent material 20 do not necessarily have the same plate thickness. In Example 1, the bottom of the dummy material 21 extends beyond an end of the parent material 20 so as to overlap the parent material 20, while in Example 3, the bottom in the vicinity of the weld of the parent material 20 are formed of the same material as the parent material 20 (see FIG. 9 (B)). In Example 3, the difference in thickness between the region in the vicinity of the weld of the parent material 20 and the other region is 3 mm, but the difference may be more than 3 mm. When the plate thickness is less than 3 mm, a portion having a high dilution ratio is left in the buttering 22 to be subsequently processed. In this case, however, the plate thickness of the bottom of the dummy material 21 is preferably as small as possible as long as the plate thickness is 3 mm or more, and 10 mm is sufficient. Thus, the same effect as that of Example 2 can be obtained.

[Example 4]

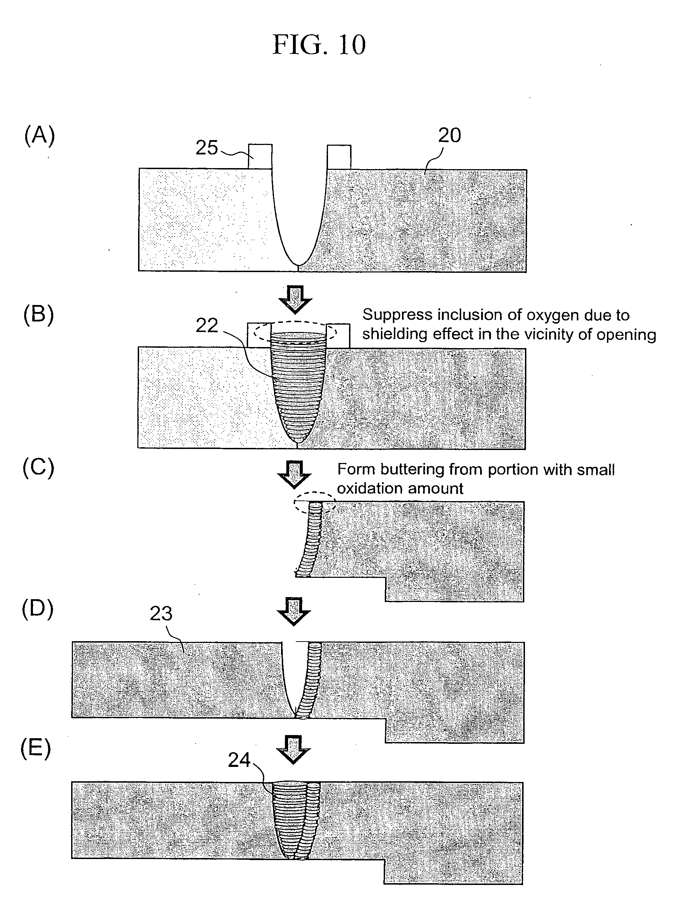

Example 4 according to the present invention will be described with reference to FIG. 10, (A) to (E). An Ni-Fe-base alloy and 12%-Cr-based steel are used as two dissimilar metals in Example 4. In Example 1 illustrates the characteristics related to the shape on the bottom side of the weld in the manufacturing method of the dissimilar metal welds. Example 4 illustrates the characteristics related to the shape on the bottom side of the weld in the manufacturing method of the dissimilar metal welds. The description of the characteristics identical with those of Example 1 is omitted, and only the differences from Example 1 will be described below.

FIG. 10, (A) to (E), shows a manufacturing flow of welding two members made of different materials according to Example 4. Example 4 differs from Example 2 only in FIG. 10, (A) and (C). FIG. 10 (A) shows the step of butting the parent material 20 and the dummy material 21. The parent material 20 and the dummy material 21 may have the plate thickness. In Example 2, a part of the dummy material 21 extends beyond an end of the parent material so as to overlap the bottom of the parent material 20, while in Example 4, a part of the dummy material 21 does not extend to overlap the bottom of the parent material 20. FIG. 10 (C) shows the step of processing the plate thickness of the weld to be smaller than the plate thickness of the parent material 20, and the step of processing the groove in the buttering 22. According to Example 4, a part of the weld bottom is cut off to remove a portion having a dilution ratio of the weld, thereby obtaining the same effect as that of Example 2.

Next, the following table shows exemplary materials of the two different parent materials of the dissimilar metal welds according to the present invention. Here, Examples 1, 3, and 4 described above, as well as Examples 5 to 8 are illustrated.

[Table 2]

| Examples | Base material on high temperature side | Base material on low temperature side |
|---|---|---|
| 1, 2 | Ni-base superalloy | 12% Cr-based steel |

(continued)

| Examples | Base material on high temperature side | Base material on low temperature side |
|---|---|---|
| 3 | Ni-base superalloy | 1% Cr-Mo-V-based steel |
| 4 | Ni-Fe-base superalloy | 12% Cr-based steel |
| 5 | Ni-Fe-base superalloy | 1% Cr-Mo-V-based steel |
| 6 | 12% Cr-based steel | 1% Cr-Mo-V-based steel |
| 7 | 12% Cr-based steel | 3~4% Ni-Cr-Mo-V-based steel |
| 8 | 1% Cr-Mo-V-based steel | 3~4% Ni-Cr-Mo-V-based steel |

Examples of a combination of parent materials in the dissimilar metal welds according to the present invention may include a combination of an Ni-base superalloy and 12%-Cr-based steel according to Examples 1 and 2, a combination of an Ni-base superalloy and 1%-Cr-Mo-V-based steel according to Example 3, and a combination of an Ni-Fe-base alloy and 12%-Cr-based steel according to Example 4, as well as a combination of an Ni-Fe-base alloy and 1%-Cr-Mo-V-based steel (Example 5), a combination of 12%-Cr-based steel and 1%-Cr-Mo-V-based steel (Example 6), a combination of 12%-Cr-based steel and 3-4%-Ni-Cr-Mo-V-based steel (Example 7), and a combination of 1%-Cr-Mo-V-based steel and 3-4%-Ni-Cr-V-based steel (Example 8). The manufacturing flows shown in Examples 1 to 4 are also applicable to Examples 5 to 8, and the same operation and effect can be achieved.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

DESCRIPTION OF SYMBOLS

1 STEAM TURBINE ROTOR
3 WELD
5 DRIVE UNIT
6 WELDING UNIT
8 SIGNAL CABLE
9 SIGNAL CABLE
10 CONTROL UNIT
11 TORCH
14 GAS BOMBE
15 POSITIONER
17 GAS HORSE
18 GAS HORSE
19 EARTH CABLE
20 PARENT MATERIAL
21 DUMMY MATERIAL
22 BUTTERING
23 PARENT MATERIAL
24 WELDED METAL
25 SHIELDING PLATE
26 SIGNAL CABLE

## Claims

1. A welded assembly comprising two parent materials and dissimilar metal welds formed by welding these two parent materials having at least one of different compositions and different refining conditions, through a buttering (22) for alleviating mismatch between one of the different compositions and the different refining conditions of the two members and through a welded metal (24) for joining one of the parent materials (20, 23) and the buttering (22), wherein the buttering (22) is formed of welding metals laminated in a plate thickness direction, **characterised in**

**that** a dilution ratio of the butt portion of the buttering (22) with the parent materials (20, 23) is equal to or less than 50%.

2. The dissimilar metal welds according to claim 1, wherein the buttering (22) includes 30 ppm or less of oxygen.

3. A steam turbine rotor (1) comprising dissimilar metal welds according to claim 1 or 2.

4. The turbine rotor according to claim 3, wherein
at least one of the two parent materials (20, 23) comprises a nickel (Ni)-base alloy including, by weight, 5 to 15% of cobalt (Co), 13 to 15.5% of chromium (Cr), 4.0 to 5.5% of aluminum (Al), 0.1 to 2.0% of titanium (Ti), 0.1 to 1.0% of niobium (Nb), 0.1 to 3.0% of tantalum (Ta), 0.1 to 2.0% of molybdenum (Mo), 4.5 to 10% of tungsten (W), 0.1 to 2.0% of hafnium(Hf), 0.05 to 0.20% of carbon (C), 0.001 to 0.03% of boron(B), 0.01 to 0.1% of zirconium(Zr), and a remainder including nickel (Ni) except for inevitable impurities.

5. The turbine rotor according to claim 3, wherein at least one of the parent materials (20, 23) comprises a nickel (Ni)-ferrum (Fe)-base alloy including, by weight, 30 to 40% of ferrum(Fe), 14 to 16% of chromium (Cr), 1.2 to 1.7% of titanium (Ti), 1.1 to 1.5% of aluminum (Al), 1.9 to 2.7% of niobium (Nb), 0.05% or less of carbon (C), and a remainder including nickel (Ni) except for inevitable impurities.

6. The turbine rotor according to claim 3, wherein at least one of the parent materials (20, 23) comprises 12%-chromium (Cr)-based steel having a wholly tempered martensite structure including, by weight, 0.1 to 0.2% of carbon (C), 0.3 to 1.0% of manganese (Mn), 1% or less of nickel (Ni), 9 to 13% of chromium (Cr), 0.1 to 1.5% of molybdenum (Mo), 0.2 to 5.0% of tungsten (W), 0.02 to 0.1% of niobium (Nb), and 3% or less of cobalt(Co).

7. The turbine rotor according to claim 3, wherein at least one of the parent materials (20, 23) comprises 1%-chromium (Cr)-molybdenum (Mo)-vanadium (V)-based steel having a bainite structure including, by weight, 0.25 to 0.35% of carbon (C), 0.5 to 1% of manganese (Mn), 1% or less of nickel (Ni), 0.8 to 1.5% of chromium (Cr), 1.0 to 1.5% of molybdenum (Mo), and 0.2 to 0.3% of vanadium (V).

8. The turbine rotor according to claim 3, wherein at least one of the parent materials (20, 23) comprises 3-4%-nickel (Ni)-chromium (Cr)-molybdenum (Mo)-vanadium (V)-based steel having a bainite structure including, by weight, 0.17 to 0.32 % of carbon (C), 0.2 to 0.4% of manganese (Mn), 3 to 4% of nickel (Ni), 1.25 to 2.0% of chromium (Cr), 0.25 to 0.60% of molybdenum (Mo), and 0.05 to 0.15% of vanadium (V).

9. The turbine rotor according to claim 3, wherein
in at least one of a rotor for a high-pressure steam turbine, a rotor for an intermediate-pressure steam turbine, and a rotor for high-pressure and intermediate-pressure steam turbines,
the parent material (20, 23) on a high-temperature side where a steam temperature is high comprises one of:

a nickel (Ni)-base alloy including, by weight, 5 to 15% of cobalt (Co), 13 to 15.5% of chromium(Cr), 4.0 to 5.5% of aluminum (Al), 0.1 to 2.0% of titanium (Ti), 0.1 to 1.0% of niobium (Nb), 0.1 to 3.0% of tantalum (Ta), 0.1 to 2.0% of molybdenum (Mo), 4.5 to 10% of tungsten (W), 0.1 to 2.0% of hafnium (Hf), 0.05 to 0.20% of carbon (C), 0.001 to 0.03% of boron (B), 0.01 to 0.1% of zirconium (Zr), and a remainder including nickel (Ni) except for inevitable impurities; and
a nickel (Ni)-ferrum (Fe)-base alloy including, by weight, 30 to 40% of ferrum (Fe), 14 to 16% of chromium (Cr), 1.2 to 1.7% of titanium (Ti), 1.1 to 1.5% of aluminum (Al), 1.9 to 2.7% of niobium (Nb), 0.05% or less of carbon (C), and a remainder including nickel (Ni) except for inevitable impurities, and
the parent material (20, 23) on a low-temperature side where the steam temperature is low comprises one of:

12%-chromium (Cr)-based steel having a wholly tempered bainite structure including, by weight, 0.1 to 0.2% of carbon (C), 0.3 to 1.0% of manganese (Mn), 1% or less of nickel (Ni), 9 to 13% of chromium (Cr), 0.1 to 1.5% of molybdenum (Mo), 0.2 to 5.0% of tungsten (W), 0.02 to 0.1% of niobium (Nb), and 3% or less of cobalt (Co); and
1%-chromium (Cr)-molybdenum (Mo)-vanadium (V)-based steel having a bainite structure including, by weight, 0.25 to 0.35% of carbon (C), 0.5 to 1% of manganese (Mn), 1% or less of nickel (Ni), 0.8 to 1.5% of chromium (Cr), 1.0 to 1.5% of molybdenum (Mo), and 0.2 to 0.3% of vanadium (V).

10. The turbine rotor according to claim 3, wherein
in one of a rotor (1) for a high-pressure steam turbine, a rotor for an intermediate-pressure steam turbine, and a rotor for high-pressure and intermediate-pressure steam turbines,
the parent material (20) on a high-temperature side where a steam temperature is high comprises 12%-chromium (Cr)-based steel having a wholly tempered martensite structure including, by weight, 0.1 to 0.2% of carbon (C), 0.3 to 1.0% of manganese (Mn), 1% or less of nickel (Ni), 9 to 13% of chromium (Cr), 0.1 to 1.5% of molybdenum (Mo), 0.2 to 5.0% of tungsten (W), 0.02 to 0.1% of niobium(Nb), and 3% or less of cobalt(Co), and
the parent material (20) on a low-temperature side where the steam temperature is low comprises 1%-chromium (Cr)-molybdenum (Mo)-vanadium (V)-based steel having a bainite structure including, by weight, 0.25 to 0.35% of carbon (C), 0.5 to 1% of manganese (Mn), 1% or less of nickel (Ni), 0.8 to 1.5% of chromium (Cr), 1.0 to 1.5% of molybdenum (Mo), and 0.2 to 0.3% of vanadium (V).

**11.** The turbine rotor according to claim 3, wherein
the turbine rotor (1) is one of a rotor for a high-pressure and low-pressure integrated steam turbine and a rotor for an intermediate-pressure and low-pressure integrated steam turbine, the rotors being formed by connecting one of a high-pressure rotor and an intermediate-pressure rotor, with a low-temperature rotor by butt welding,
the one of the high-pressure rotor and the intermediate-pressure rotor comprises one of:

1%-chromium (Cr)-molybdenum (Mo)-vanadium (V)-based steel having a bainite structure including, by weight, 0.25 to 0.35% of carbon (C), 0.5 to 1% of manganese (Mn), 1% or less of nickel (Ni), 0.8 to 1.5% of chromium (Cr), 1.0 to 1.5% of molybdenum (Mo), and 0.2 to 0.3% of vanadium (V); and
12%-chromium (Cr)-based steel having a wholly tempered martensite structure including, by weight, 0.1 to 0.2% of carbon (C), 0.3 to 1.0% of manganese (Mn), 1% or less of nickel (Ni), 9 to 13% of chromium (Cr), 0.1 to 1.5% of molybdenum (Mo), 0.2 to 5.0% of tungsten (W), 0.02 to 0.1% of niobium (Nb), and 3% or less of cobalt (Co), and
the low-temperature rotor comprises 3-4%-nickel (Ni)-chromium (Cr)-molybdenum (Mo)-vanadium (V)-based steel having a bainite structure including, by weight, 0.17 to 0.32% of carbon (C), 0.2 to 0.4% of manganese (Mn), 3 to 4% of nickel (Ni), 1.25 to 2.0% of chromium (Cr), 0.25 to 0.60% of molybdenum (Mo), and 0.05 to 0.15% of vanadium (V).

**12.** A method of manufacturing one of dissimilar metal welds and a turbine rotor (1) including the dissimilar metal welds (3), the dissimilar metal welds being formed by welding two parent materials (20, 23) having at least one of different compositions and different refining conditions, through a buttering (22) for alleviating mismatch between one of the different compositions and the different refining conditions of the two members and through a welded metal for joining one of the parent materials and the buttering (22), the method being **characterised by** comprising at least the steps of:

performing butt welding on a dummy material (21) formed by increasing a groove depth by providing a member on a side of a bottom of a welding groove, and on the parent materials (20, 23), by using the buttering (22); and
processing a groove within a welding metal formed of the buttering (22), by removing a part
of each of the dummy natural (21) and the butturing (22) at the bottom of the groove.

**13.** A method manufacturing of one of dissimilar metal welds and a turbine rotor (1) including the dissimilar metal welds, the dissimilar metal welds being formed by welding two parent materials (20, 23) having at least one of different compositions and different refining conditions, through a buttering (22) for alleviating mismatch between one of the different compositions and the different refining conditions of the two members and through a welded metal for joining one of the parent materials and the buttering (22), the method being **characterised by** comprising at least the steps of:

performing butt welding on a dummy material (21) formed by increasing a groove depth by providing a member on an opening side of a welding groove, and on the parent materials (20, 23), by using the buttering (22); and
processing a groove within a welding metal (24) formed of the buttering (22), by removing a part of each of the dummy material (21) and the butturing (22) at the open side of the welding groove.

**14.** The method of one of dissimilar metal welds and a turbine rotor including the dissimilar metal welds according to claim 12 or 13, wherein the dummy material (21) has a heat capacity of the same level as that of the parent material (20, 23).

**15.** The method of one of dissimilar metal welds and a turbine rotor including the dissimilar metal welds according to any one of claims 12 to 14, wherein the dummy material (21) has the same chemical composition as that of the parent material (20, 23).

**16.** The method of one of dissimilar metal welds and a turbine rotor including the dissimilar metal welds according to claim 12, wherein in the butt welding step,
the dummy material (21) has a bottom having a plate thickness of 3 mm or more, the bottom being butted to extend along a bottom surface of the parent materials (20, 24) from a groove center.

**17.** The method of one of dissimilar metal welds and a turbine rotor including the dissimilar metal welds according to claim 12 or 16, wherein in the butt welding step, a bottom of the dummy material (21) is butted to overlap in length within a range of 3 to 15 mm along a bottom surface of the parent materials (20, 23) from a groove center.

**18.** The method of one of dissimilar metal welds and a turbine rotor including the dissimilar metal welds according to any one of claims 12 and 14 to 17, wherein the step of processing a groove within a welding metal (24) made of the buttering material comprising processing a butt portion of the buttering (22) to have a dilution ratio of 50% or less.

**19.** The method of one of dissimilar metal welds and a turbine rotor including the dissimilar metal welds according to any one of claims 12 and 14 to 18, wherein the step of processing a groove within a welding metal (24) made of the buttering material comprising processing a plate thickness of the weld to be smaller than a plate thickness of one of the parent materials (20, 23) and the dummy material (21).

**Patentansprüche**

**1.** Geschweißte Verbindung, welche zwei Muttermaterialien umfasst sowie eine ungleiche Metallschweißung, welche gebildet wird durch das Verschweißen dieser beiden Muttermaterialien, wobei diese mindestens unterschiedliche Zusammensetzungen oder unterschiedliche Feinungsmethoden aufweisen, durch eine Pufferung (22) zum Zwecke des Abschwächens der Unterschiede zwischen den unterschiedlichen Zusammensetzungen oder den unterschiedlichen Feinungsmethoden der beiden Teile, sowie durch ein geschweißtes Metall (24), welches dem Zusammenfügen der Muttermaterialien (20, 23) und der Pufferung (22) dient,
wobei die Pufferung (22) aus Schweißmaterialien geformt wird, welche in Dickenrichtung der Platte laminiert sind, **dadurch gekennzeichnet, dass** das Verdünnungsverhältnis des Stoßbereichs der Pufferung (22) gegenüber den Muttermaterialien (20, 23) gleich oder kleiner 50% beträgt.

**2.** Die ungleichen Metallschweißungen nach Anspruch 1, wobei die Pufferung (22) 30 ppm Sauerstoff oder weniger enthält.

**3.** Der Dampfturbinenrotor (1), welcher ungleiche Metallschweißungen nach Anspruch 1 oder 2 enthält.

**4.** Der Turbinenrotor nach Anspruch 3, wobei
mindestens eines der beiden Muttermaterialien (20, 23) eine Nickel (Ni)-basislegierung umfasst, welche nach Gewicht 5 bis 15% Cobalt (Co), 13 bis 15,5% Chrom (Cr), 4,0 bis 5,5% Aluminium (Al), 0,1 bis 2,0% Titan (Ti), 0,1 bis 1,0% Niobium (Nb), 0,1 bis 3,0% Tantal (Ta), 0,1 bis 2,0% Molybdän (Mo), 4,5 bis 10% Wolfram (W), 0,1 bis 2,0% Hafnium (Hf), 0,05 bis 0,20% Kohlenstoff (C), 0,001 bis 0,03% Bor (B), 0,01 bis 0,1% Zirkonium (Zr) enthält und einen Rest, welcher bis auf unvermeidbare Verunreinigungen Nickel (Ni) enthält.

**5.** Der Turbinenrotor nach Anspruch 3, wobei mindestens eines der Muttermaterialien (20, 23) eine Nickel (Ni)-Eisen (Fe)-basislegierung umfasst, welche nach Gewicht 30 bis 40% Eisen (Fe), 14 bis 16% Chrom (Cr), 1,2 bis 1,7% Titan (Ti), 1,1 bis 1,5% Aluminium (Al), 1,9 bis 2,7% Niobium (Nb), 0,05% oder weniger Kohlenstoff (C) enthält, und einen Rest, welcher bis auf unvermeidbare Verunreinigungen Nickel (Ni) enthält.

**6.** Der Turbinenrotor nach Anspruch 3, wobei mindestens eines der Muttermaterialien (20, 23) 12% Chrom (Cr)-basierten Stahl umfasst, welcher eine vollständig angelassene Martensitstruktur aufweist und nach Gewicht 0,1 bis 0,2% Kohlenstoff (C), 0,3 bis 1,0% Mangan (Mn), 1% oder weniger Nickel (Ni), 9 bis 13% Chrom (Cr), 0,1 bis 1,5% Molybdän (Mo), 0,2 bis 5,0% Wolfram (W), 0,02 bis 0,1% Niobium (Nb), sowie enthält 3% oder weniger Cobalt (Co) enthält.

**7.** Der Turbinenrotor nach Anspruch 3, wobei mindestens eines der Muttermaterialien (20, 23) 1%-Chrom (Cr)- Molybdän (Mo)-Vanadium (V)-basierten Stahl umfasst, welcher eine Bainitstruktur aufweist und nach Gewicht 0,25 bis 0,35% Kohlenstoff (C), 0, 5 bis 1 % Mangan (Mn), 1% oder weniger Nickel (Ni), 0,8 bis 1,5% Chrom (Cr), 1,0 bis 1,5% Molybdän (Mo), und 0,2 bis 0,3% Vanadium (V) enthält.

**8.** Der Turbinenrotor nach Anspruch 3, wobei mindestens eines der Muttermaterialien (20, 23) 3-4%-Nickel (Ni)-Chrom (Cr)-Molybdän (Mo)-Vanadium (V)- basierten Stahl umfasst, welcher eine Bainitstruktur aufweist und nach Gewicht 0,17 bis 0,32 % Kohlenstoff (C), 0,2 bis 0,4% Mangan (Mn), 3 bis 4% Nickel (Ni), 1,25 bis 2,0% Chrom (Cr), 0,25 bis 0,60% Molybdän (Mo) und 0,05 bis 0,15% Vanadium (V) enthält.

**9.** Der Turbinenrotor nach Anspruch 3, wobei bei mindestens einem der folgenden: ein Rotor für eine Hochdruck-Dampfturbine, ein Rotor für eine Mitteldruck-Dampfturbine und ein Rotor für Hochdruck- und Mitteldruck-Dampfturbinen, das Muttermaterial (20, 23) auf einer Hochtemperaturseite, auf der die Dampftemperatur hoch ist, eines der folgenden umfasst:

eine Nickel (Ni)-basislegierung, welche nach Gewicht 5 bis 15% Cobalt (Co), 13 bis 15,5% Chrom(Cr), 4,0 bis 5,5% Aluminium (Al), 0,1 bis 2,0% of Titan (Ti), 0,1 bis 1,0% Niobium (Nb), 0,1 bis 3,0% Tantal (Ta), 0,1 bis 2,0% Molybdän (Mo), 4,5 bis 10% Wolfram (W), 0,1 bis 2,0% Hafnium (Hf), 0,05 bis 0,20% Kohlenstoff (C), 0,001 bis 0,03% Bor (B), 0,01 bis 0,1% Zirkonium (Zr) enthält und einen Rest, welcher bis auf unvermeidbare Verunreinigungen Nickel (Ni) enthält; und
eine Nickel (Ni)-Eisen (Fe)- basislegierung, welche nach Gewicht 30 bis 40% Eisen (Fe), 14 bis 16% Chrom (Cr), 1,2 bis 1,7% Titan (Ti), 1,1 bis 1,5% Aluminium (Al), 1,9 bis 2,7% Niobium (Nb), 0,05% oder weniger Kohlenstoff (C) enthält und einen Rest, welcher bis auf unvermeidbare Verunreinigungen Nickel (Ni) enthält, und das Muttermaterial (20, 23) auf einer Niedertemperaturseite,
auf der die Dampftemperatur niedrig ist, eines der folgenden umfasst:

12% Chrom (Cr)-basierten Stahl, welcher eine vollständig angelassene Bainitstruktur aufweist und nach Gewicht 0,1 bis 0,2% Kohlenstoff (C) enthält, 0,3 bis 1,0% of Mangan (Mn), 1% oder weniger Nickel (Ni), 9 bis 13% Chrom (Cr), 0,1 bis 1,5% Molybdän (Mo), 0,2 bis 5,0% Wolfram(W), 0,02 bis 0,1% Niobium (Nb) und 3% oder weniger Cobalt (Co); und 1%-Chrom (Cr)- Molybdän (Mo)-Vanadium (V)-basierten Stahl, welcher eine Bainitstruktur aufweist und nach Gewicht 0,25 bis 0,35% Kohlenstoff (C), 0,5 bis 1 % Mangan (Mn), 1% oder weniger Nickel (Ni), 0,8 bis 1,5% Chrom (Cr), 1,0 bis 1,5% Molybdän (Mo) und 0,2 bis 0,3% Vanadium (V) enthält.

**10.** Der Turbinenrotor nach Anspruch 3, wobei bei mindestens einem der folgenden: ein Rotor für eine Hochdruck-Dampfturbine, ein Rotor für eine Mitteldruck-Dampfturbine und ein Rotor für Hochdruck- und Mitteldruck-Dampfturbinen, das Muttermaterial (20) auf einer Hochtemperaturseite, auf der die Dampftemperatur hoch ist, 12%-Chrom (Cr)-basierten Stahl umfasst, welcher eine vollständig angelassene Martensitstruktur aufweist und nach Gewicht 0,1 bis 0,2% Kohlenstoff (C), 0,3 bis 1,0% Mangan (Mn), 1% oder weniger Nickel (Ni), 9 bis 13% Chrom (Cr), 0,1 bis 1,5% Molybdän (Mo), 0,2 bis 5,0% Wolfram (W), 0,02 bis 0,1% Niobium(Nb) und 3% oder weniger Cobalt (Co), und das Muttermaterial (20) auf einer Niedertemperaturseite, auf der die Dampftemperatur niedrig ist, folgendes umfasst:

1%-Chrom (Cr)-Molybdän (Mo)-Vanadium (V)-basierten Stahl,
welcher eine Bainitstruktur aufweist und nach Gewicht 0,25 bis 0,35% Kohlenstoff (C), 0,5 bis 1% Mangan (Mn), 1% oder weniger Nickel (Ni), 0,8 bis 1,5% Chrom (Cr), 1,0 bis 1,5 % Molybdän (Mo) und 0,2 bis 0,3% Vanadium (V) enthält.

**11.** Der Turbinenrotor nach Anspruch 3, wobei der Turbinenrotor (1) entweder ein Rotor für eine Hochdruck- und Niederdruck-integrierte Dampfturbine oder ein Rotor für eine Mitteldruck- und Niederdruck-integrierte Dampfturbine ist, wobei die Rotoren gebildet werden, indem entweder ein Hochdruck-Rotor oder ein Mitteldruck-Rotor mit einem Niederdruck-Rotor durch Stumpfschweißung verbunden wird, und wobei entweder der Hochdruck-Rotor oder der Mitteldruck-Rotor eines der folgenden umfasst:

1%-Chrom (Cr)-Molybdän (Mo)-Vanadium (V)-basierten Stahl,
welcher eine Bainitstruktur aufweist und nach Gewicht 0,25 bis 0,35% Kohlenstoff (C), 0,5 bis 1% of Mangan (Mn), 1% oder weniger Nickel (Ni), 0,8 bis 1,5% Chrom (Cr), 1,0 bis 1,5 % Molybdän (Mo) und 0,2 bis 0,3% Vanadium (V) enthält; und
12%-Chrom (Cr)-basierten Stahl, welcher eine vollständig angelassene Martensitstruktur aufweist und nach Gewicht 0,1 bis 0,2% Kohlenstoff (C), 0,3 bis 1,0% Mangan (Mn), 1% oder
weniger Nickel (Ni), 9 bis 13% Chrom (Cr), 0,1 bis 1.5% Molybdän (Mo), 0,2 bis 5,0% Wolfram (W), 0,02 bis 0,1% Niobium (Nb) und 3% oder weniger Cobalt (Co) enthält, und
wobei der Niedertemperatur-Rotor 3-4%-Nickel (Ni)- Chrom (Cr)-Molybdän (Mo)-Vanadium (V)-basierten Stahl umfasst, welcher eine Bainitstruktur aufweist und nach Gewicht 0,17 bis 0,32% Kohlenstoff (C), 0,2 bis 0,4% Mangan (Mn), 3 bis 4% Nickel (Ni), 1,25 bis 2,0% Chrom (Cr), 0,25 bis 0,60% Molybdän (Mo) und 0,05 bis 0,15% Vanadium (V) enthält.

**12.** Eine Methode zur Herstellung entweder von ungleichen Metallschweißungen oder eines Turbinenrotors (1) einschließlich der ungleichen Metallschweißungen (3), wobei die ungleichen Metallschweißungen geformt werden durch das Verschweißen von zwei Muttermaterialien (20, 23), welche mindestens unterschiedliche Zusammensetzungen oder unterschiedliche Feinungsmethoden aufweisen, durch eine Pufferung (22) zum Zwecke des Abschwächens der Unterschiede zwischen entweder den unterschiedlichen Zusammensetzungen oder den unterschiedlichen Feinungsmethoden der beiden Teile, sowie durch ein geschweißtes Metall, welches dem Zusammenfügen eines der Muttermaterialien mit der Pufferung (22) dient, wobei die Methode **dadurch gekennzeichnet ist, dass** sie mindestens einen der folgenden Schritte umfasst:

das Stumpfschweißen auf einem Dummymaterial (21), welches geformt wird durch das Vergrößern der Rillentiefe durch die Bereitstellung eines Bauteiles auf einer Seite des Grundes der Schweißrille, und auf den Muttermaterialien (20, 23) durch die Verwendung einer Pufferung (22); sowie
die Verarbeitung einer Rille in einem Schweißmetall, welches geformt wird durch die Pufferung (22), durch Entfernen eines Teils jeweils des Dummy-Materials (21) und der Pufferung (22) am Grund der Rille.

**13.** Eine Methode zur Herstellung entweder von ungleichen Metallschweißungen oder eines Turbinenrotors (1) einschließlich der ungleichen Metallschweißungen (3), wobei die ungleichen Metallschweißungen geformt werden durch das Verschweißen von zwei Muttermaterialien (20, 23), welche mindestens unterschiedliche Zusammensetzungen oder unterschiedliche Feinungsmethoden aufweisen, durch eine Pufferung (22) zum Zwecke des Abschwächens der Unterschiede zwischen den unterschiedlichen Zusammensetzungen oder den unterschiedlichen Feinungsmethoden der beiden Teile, sowie durch ein geschweißtes Metall, welches dem Zusammenfügen eines der Muttermaterialien mit der Pufferung (22) dient, wobei die Methode der Herstellung **dadurch gekennzeichnet ist, dass** sie mindestens einen der folgenden Schritte umfasst:

das Stumpfschweißen auf einem Dummy-Material (21), welches geformt wird durch das Vergrößern der Rillentiefe durch die Bereitstellung eines Bauteiles auf einer Öffnungsseite der Schweißrille, und auf den Muttermaterialien (20, 23) durch die Verwendung einer Pufferung (22); sowie
durch die Bearbeitung einer Rille in einem Schweißmetall (24),
welches geformt wird aus der Pufferung (22), durch das Entfernen eines Teils jeweils des Dummy-Materials (21) und der Pufferung (22) an der offenen Seite der Schweißrille.

**14.** Die Methode entweder für ungleiche Metallschweißungen oder einen Turbinenrotor einschließlich der ungleichen Metallschweißungen nach Anspruch 12 oder 13, wobei das Dummy-Material (21) einen Wärmekapazitätslevel aufweist, welche dem des Muttermaterials (20, 23) entspricht.

**15.** Die Methode entweder für ungleiche Metallschweißungen oder einen Turbinenrotor einschließlich der ungleichen Metallschweißungen nach irgendeinem der Ansprüche 12 bis 14, wobei das wobei das Dummy-Material (21) die gleiche chemische Zusammensetzung aufweist wie das Muttermaterial (20, 23).

**16.** Die Methode entweder für ungleiche Metallschweißungen oder einen Turbinenrotor einschließlich der ungleichen Metallschweißungen nach Anspruch 12, wobei das Dummy-Material (21) im Arbeitsschritt des Stumpfschweißens einen Grund mit einer Blechstärke von 3 mm oder mehr aufweist, und der Grund derart stumpf zusammengefügt wird, dass er sich vom Zentrum der Rille aus entlang der Grundoberfläche der Muttermaterialien (20, 24) erstreckt.

**17.** Die Methode entweder für ungleiche Metallschweißungen oder einen Turbinenrotor einschließlich der ungleichen Metallschweißungen nach Anspruch 12 oder 16, wobei der Grund des Dummy-Materials (21) im Arbeitsschritt des Stumpfschweißens derart stumpf zusammengefügt wird, dass er vom Zentrum der Rille aus entlang der Grundoberfläche der Muttermaterialien (20, 23) in einer Länge zwischen 3 und 15 mm überlappt.

**18.** Die Methode entweder für ungleiche Metallschweißungen oder einen Turbinenrotor einschließlich der ungleichen Metallschweißungen nach irgendeinem der Ansprüche 12 und 14 bis 17, wobei der Arbeitsschritt der Bearbeitung einer Rille in einem Schweißmaterial (24), welches aus Puffermaterial besteht, die Bearbeitung des Stoßbereichs der Pufferung (22) dergestalt umfasst, sodass dieser ein Verdünnungsverhältnis gleich oder kleiner 50% aufweist.

**19.** Die Methode entweder für ungleiche Metallschweißungen oder einen Turbinenrotor (1) einschließlich der ungleichen Metallschweißungen (3) nach irgendeinem der Ansprüche 12 und 14 bis 18, wobei der Arbeitsschritt der Verarbeitung einer Rille in einem Schweißmaterial (24), welches aus Puffermaterial besteht, die Bearbeitung der Blechstärke der Schweißung umfasst, sodass diese geringer ist als die Blechstärke eines der Muttermaterialien (20, 23) und des Dummy-Materials (21).

## Revendications

**1.** Ensemble soudé comprenant deux matériaux parents et des soudures de métaux dissemblables formées en soudant ces deux matériaux parents ayant au moins une parmi des compositions différentes et des conditions de raffinage différentes, par l'intermédiaire d'un beurrage (22) pour limiter une non correspondance entre une des compositions différentes et des conditions de raffinage différentes des deux éléments et par l'intermédiaire d'un métal soudé (24) pour joindre un des matériaux parents (20, 23) et le beurrage (22),
dans lequel le beurrage (22) est constitué de matériaux de soudure stratifiés dans un sens d'épaisseur de plaque, **caractérisé en ce qu'**un rapport de dilution de la partie de talon du beurrage (22) avec les matériaux parents (20, 23) est égal ou inférieur à 50%.

**2.** Soudures de métaux dissemblables selon la revendication 1, dans lesquelles le beurrage (22) inclut 30 ppm ou moins d'oxygène.

**3.** Rotor (1) de turbine à vapeur comprenant des soudures de métaux dissemblables selon la revendication 1 ou 2.

**4.** Rotor de turbine selon la revendication 3, dans lequel
au moins un des deux matériaux parents (20, 23) comprend un alliage à base de nickel (Ni) incluant, en poids, 5 à 15% de cobalt (Co), 13 à 15,5% de chrome (Cr), 4,0 à 5,5% d'aluminium (Al), 0,1 à 2,0% de titane (Ti), 0,1 à 1,0% de niobium (Nb), 0,1 à 3,0% de tantale (Ta), 0,1 à 2,0% de molybdène (Mo), 4,5 à 10% de tungstène (W), 0,1 à 2,0% de hafnium (Hf), 0,05 à 0,20% de carbone (C), 0,001 à 0,03% de bore (B) , 0,01 à 0,1% de zirconium (Zr), et un reste incluant du nickel (Ni) à l'exception des impuretés inévitables.

**5.** Rotor de turbine selon la revendication 3, dans lequel au moins un des deux matériaux parents (20, 23) comprend un alliage à base de nickel (Ni)-fer (Fe) incluant, en poids, 30 à 40% de fer (Fe), 14 à 16% de chrome (Cr), 1,2 à 1,7% de titane (Ti), 1,1 à 1,5% d'aluminium (Al), 1,9 à 2,7% de niobium (Nb), 0,05% ou moins de carbone, et un reste incluant du nickel (Ni) à l'exception des impuretés inévitables.

**6.** Rotor de turbine selon la revendication 3, dans lequel au moins un des deux matériaux parents (20, 23) comprend un acier à base de 12% de chrome (Cr) ayant une structure de martensite totalement revenue incluant, en poids, 0,1 à 0,2% de carbone (C), 0,3 à 1,0% de manganèse (Mn), 1% ou moins de nickel (Ni), 9 à 13% de chrome (Cr), 0,1 à 1,5% de molybdène (Mo), 0,2 à 5,0% de tungstène (W), 0,02 à 0,1% de niobium (Nb), et 3% ou moins de cobalt (Co).

**7.** Rotor de turbine selon la revendication 3, dans lequel au moins un des deux matériaux parents (20, 23) comprend un acier à base de 1% de chrome (Cr)-molybdène (Mo)-vanadium (V) ayant une structure de bainite incluant, en poids, 0,25 à 0,35% de carbone (C), 0,5 à 1,0% de manganèse (Mn), 1% ou moins de nickel (Ni), 0,8 à 1,5% de chrome (Cr), 1,0 à 1,5% de molybdène (Mo), et 0,2 à 0,3% de vanadium (V).

**8.** Rotor de turbine selon la revendication 3, dans lequel au moins un des deux matériaux parents (20, 23) comprend un acier à base de 3-4% de nickel (Ni)-chrome (Cr)-molybdène (Mo)-vanadium (V) ayant une structure de bainite incluant, en poids, 0,17 à 0,32% de carbone (C), 0,2 à 0,4% de manganèse (Mn), 3 à 4% de nickel (Ni), 1,25 à 2,0% de chrome (Cr), 0,25 à 0,60% de molybdène (Mo), et 0,05 à 0,15% de vanadium (V).

**9.** Rotor de turbine selon la revendication 3, dans lequel
dans au moins un parmi un rotor pour une turbine à vapeur à haute pression, un rotor pour une turbine à vapeur à pression intermédiaire, et un rotor pour des turbines à vapeur à haute pression et à pression intermédiaire,
le matériau parent (20, 23) sur un côté de haute température où une température de vapeur est haute comprend un parmi :

un alliage à base de nickel (Ni) incluant, en poids, 5 à 15% de cobalt (Co), 13 à 15,5% de chrome (Cr), 4,0 à 5,5% d'aluminium (Al), 0,1 à 2,0% de titane (Ti), 0,1 à 1,0% de niobium (Nb), 0,1 à 3,0% de tantale (Ta), 0,1 à 2,0% de molybdène (Mo), 4,5 à 10% de tungstène (W), 0,1 à 2,0% de hafnium (Hf), 0,05 à 0,20% de carbone (C), 0,001 à 0,03% de bore (B), 0,01 à 0,1% de zirconium (Zr), et un reste incluant du nickel (Ni) à l'exception des impuretés inévitables ; et

un alliage à base de nickel (Ni)-fer (Fe) incluant, en poids, 30 à 40% de fer (Fe), 14 à 16% de chrome (Cr), 1,2 à 1,7% de titane (Ti), 1,1 à 1,5% d'aluminium (Al), 1,9 à 2,7% de niobium (Nb), 0,05% ou moins de carbone, et un reste incluant du nickel (Ni) à l'exception des impuretés inévitables, et

le matériau parent (20, 23) sur un côté de basse température où la température de vapeur est basse comprend un parmi :

un acier à base de 12% de chrome (Cr) ayant une structure de bainite totalement revenue incluant, en poids, 0,1 à 0,2% de carbone (C), 0,3 à 1,0% de manganèse (Mn), 1% ou moins de nickel (Ni), 9 à 13% de chrome (Cr), 0,1 à 1,5% de molybdène (Mo), 0,2 à 5,0% de tungstène (W), 0,02 à 0,1% de niobium (Nb), et 3% ou moins de cobalt (Co) ; et

un acier à base de 1% de chrome (Cr)-molybdène (Mo)-vanadium (V) ayant une structure de bainite incluant, en poids, 0,25 à 0,35% de carbone (C), 0,5 à 1,0% de manganèse (Mn), 1% ou moins de nickel (Ni), 0,8 à 1,5% de chrome (Cr), 1,0 à 1,5% de molybdène (Mo), et 0,2 à 0,3% de vanadium (V).

**10.** Rotor de turbine selon la revendication 3, dans lequel

dans un parmi un rotor (1) pour une turbine à vapeur à haute pression, un rotor pour une turbine à vapeur à pression intermédiaire, et un rotor pour des turbines à vapeur à haute pression et à pression intermédiaire,

le matériau parent (20) sur un côté de haute température où une température de vapeur est haute comprend un acier à base de 12% de chrome (Cr) ayant une structure de martensite totalement revenue incluant, en poids, 0,1 à 0,2% de carbone (C), 0,3 à 1,0% de manganèse (Mn), 1% ou moins de nickel (Ni), 9 à 13% de chrome (Cr), 0,1 à 1,5% de molybdène (Mo), 0,2 à 5,0% de tungstène (vil), 0,02 à 0,1% de niobium (Nb), et 3% ou moins de cobalt (Co), et

le matériau parent (20) sur un côté de basse température où la température de vapeur est basse comprend un acier à base de 1% de chrome (Cr)-molybdène (Mo)-vanadium (V) ayant une structure de bainite incluant, en poids, 0,25 à 0,35% de carbone (C), 0,5 à 1,0% de manganèse (Mn), 1% ou moins de nickel (Ni), 0,8 à 1,5% de chrome (Cr), 1,0 à 1,5% de molybdène (Mo), et 0,2 à 0,3% de vanadium (V).

**11.** Rotor de turbine selon la revendication 3, dans lequel

le rotor (1) de turbine est un parmi un rotor pour une turbine à vapeur intégrée à haute pression et basse pression et un rotor pour une turbine à vapeur intégrée à pression intermédiaire et basse pression, les rotors étant formés en connectant un parmi un rotor à haute pression et un rotor à pression intermédiaire, avec un rotor à basse température par soudage en bout,

celui parmi le rotor à haute pression et le rotor à pression intermédiaire comprend un parmi :

un acier à base de 1% de chrome (Cr)-molybdène (Mo)-vanadium (V) ayant une structure de bainite incluant, en poids, 0,25 à 0,35% de carbone (C), 0,5 à 1% de manganèse (Mn), 1% ou moins de nickel (Ni), 0,8 à 1,5% de chrome (Cr), 1,0 à 1,5% de molybdène (Mo), et 0,2 à 0,3% de vanadium (V) ; et

un acier à base de 12% de chrome (Cr) ayant une structure de martensite totalement revenue incluant, en poids, 0,1 à 0,2% de carbone (C), 0,3 à 1,0% de manganèse (Mn), 1% ou moins de nickel (Ni), 9 à 13% de chrome (Cr), 0,1 à 1,5% de molybdène (Mo), 0,2 à 5,0% de tungstène (W), 0,02 à 0,1% de niobium (Nb), et 3% ou moins de cobalt (Co), et

le rotor à basse température comprend un acier à base de 3-4% de nickel (Ni)-chrome (Cr)-molybdène (Mo)-vanadium (V) ayant une structure de bainite incluant, en poids, 0,17 à 0,32% de carbone (C), 0,2 à 0,4% de manganèse (Mn), 3 à 4% de nickel (Ni), 1,25 à 2,0% de chrome (Cr), 0,25 à 0,60% de molybdène (Mo), et 0,05 à 0,15% de vanadium (V).

**12.** Procédé de fabrication d'une parmi des soudures de métaux dissemblables et d'un rotor (1) de turbine incluant les soudures (3) de métaux dissemblables, les soudures de métaux dissemblables étant formées en soudant deux matériaux parents (20, 23) ayant au moins une parmi des compositions différentes et des conditions de raffinage différentes, par l'intermédiaire d'un beurrage (22) pour limiter une non correspondance entre une des compositions différentes et des conditions de raffinage différentes des deux éléments et par l'intermédiaire d'un métal soudé pour joindre un des matériaux parents et le beurrage (22), le procédé étant **caractérisé en ce que** comprenant au moins les étapes de :

exécution d'une soudure en bout sur un matériau factice (21) formée en augmentant une profondeur de rainure en amenant un élément sur un côté d'un fond d'une rainure de soudage, et sur les matériaux parents (20, 23), en utilisant le beurrage (22) ; et

traitement d'une rainure à l'intérieur d'un métal de soudage constitué du beurrage (22), en enlevant une partie de chacun du matériau factice (21) et du beurrage (22) du fond de la rainure.

**13.** Procédé de fabrication d'une parmi des soudures de métaux dissemblables et d'un rotor (1) de turbine incluant les soudures de métaux dissemblables, les soudures de métaux dissemblables étant formées en soudant deux matériaux parents (20, 23) ayant au moins une parmi des compositions différentes et des conditions de raffinage différentes, par l'intermédiaire d'un beurrage (22) pour limiter une non correspondance entre une des compositions différentes et des conditions de raffinage différentes des deux éléments et par l'intermédiaire d'un métal soudé pour joindre un des matériaux parents et le beurrage (22), le procédé étant **caractérisé en ce que** comprenant au moins les étapes de :

exécution d'une soudure en bout sur un matériau factice (21) formée en augmentant une profondeur de rainure en amenant un élément sur un côté d'ouverture d'une rainure de soudage, et sur les matériaux parents (20, 23), en utilisant le beurrage (22) ; et

traitement d'une rainure à l'intérieur d'un métal de soudage (24) constitué du beurrage (22), en enlevant une partie de chacun du matériau factice (21) et du beurrage (22) sur le côté ouvert de la rainure de soudage.

**14.** Procédé de fabrication d'une parmi des soudures de métaux dissemblables et d'un rotor de turbine incluant les soudures de métaux dissemblables selon la revendication 12 ou 13, dans lequel le matériau factice (21) a une capacité thermique du même niveau que celle du matériau parent (20, 23).

**15.** Procédé de fabrication d'une parmi des soudures de métaux dissemblables et d'un rotor de turbine incluant les soudures de métaux dissemblables selon l'une quelconque des revendications 12 à 14, dans lequel le matériau factice (21) a la même composition chimique que celle du matériau parent (20, 23).

**16.** Procédé de fabrication d'une parmi des soudures de métaux dissemblables et d'un rotor de turbine incluant les soudures de métaux dissemblables selon la revendication 12, dans lequel, à l'étape de soudage en bout, le matériau factice (21) a un fond ayant une épaisseur de plaque de 3 mm ou plus, le fond étant abouté de façon à s'étendre le long d'une surface de fond des matériaux parents (20, 24) à partir d'un centre de rainure.

**17.** Procédé de fabrication d'une parmi des soudures de métaux dissemblables et d'un rotor de turbine incluant les soudures de métaux dissemblables selon la revendication 12 ou 16, dans lequel, à l'étape de soudage en bout, un fond du matériau factice (21) est abouté de façon à chevaucher en longueur dans une plage de 3 à 15 mm le long d'une surface de fond des matériaux parents (20, 23) à partir d'un centre de rainure.

**18.** Procédé de fabrication d'une parmi des soudures de métaux dissemblables et d'un rotor de turbine incluant les soudures de métaux dissemblables selon l'une quelconque des revendications 12 et 14 à 17, dans lequel l'étape de traitement d'une rainure à l'intérieur d'un métal de soudage (24) constitué du matériau de beurrage comprend le traitement d'une partie de bout du beurrage (22) de façon à avoir un taux de dilution de 50% ou moins.

**19.** Procédé de fabrication d'une parmi des soudures de métaux dissemblables et d'un rotor de turbine incluant les soudures de métaux dissemblables selon l'une quelconque des revendications 12 et 14 à 18, dans lequel l'étape de traitement d'une rainure à l'intérieur d'un métal de soudage (24) constitué du matériau de beurrage comprend le traitement d'une épaisseur de plaque de la soudure pour être plus petite qu'une épaisseur de plaque d'un des matériaux parents (20, 23) et du matériau factice (21).

FIG. 1

14
18
10
8
9
5
6
3
17
11
19
1
26
15

FIG. 2

(A)
21
20
(B)
22
(C)
(D)
23
(E)
24

FIG. 3

(A)
20
(B)
22
(C)
(D)
23
(E)
24

# FIG. 4

22
20
(a) Notch direction: perpendicular to laminated direction
(b) Notch direction: same as laminated direction
Laminated direction

Impact absorption energy v25
About ten-fold
(a) Perpendicular to laminated direction
(b) Same as laminated direction
Notch direction

FIG. 5A

Padding welding on plane

22
20

FIG. 5B

Butt welding on groove
21
20
20

FIG. 6

(A)
21
20
(B)
22
(C)
Uranami welding with high dilution rate is required
Portion having high dilution rate is included
(D)
23
(E)
24

FIG. 7A

Object of model
21
22
20
Fusion zone obtained by root running

FIG. 7B

Simple model
x
22
20
21
y
z

FIG. 8

(A)
25
20
(B)
22
Suppress inclusion of oxygen due to shielding effect in the vicinity of opening
(C)
Form buttering from portion with small oxidation amount
(D)
23
(E)
24

FIG. 9

(A)
25
20
(B)
22
Suppress inclusion of oxygen due to shielding effect in the vicinity of opening
(C)
Form buttering from portion with small oxidation amount
(D)
23
(E)
24

FIG. 10

(A)
25
20
(B)
22
Suppress inclusion of oxygen due to shielding effect in the vicinity of opening
(C)
Form buttering from portion with small oxidation amount
(D)
23
(E)
24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007278064 A
- JP 2001123801 A
- JP 2000064805 A
- JP 6078721 B
- JP 6339776 A